# EUROPÄISCHE PATENTSCHRIFT

(11) **EP 2 032 484 B1**
(45) Veröffentlichungstag und Bekanntmachung des Hinweises auf die Patenterteilung: **18.07.2012**
(21) Anmeldenummer: 07764701.4
(22) Anmeldetag: 18.06.2007
(51) Int. Cl.: B65G 51/03, B65G 47/51

(54) **LUFTFÖRDERER FÜR FLASCHEN**
AIR CONVEYOR FOR BOTTLES
TRANSPORTEUR PNEUMATIQUE POUR BOUTEILLES

(30) Priorität: 19.06.2006 DE 202006009652 U
(43) Veröffentlichungstag der Anmeldung: 11.03.2009
(73) Patentinhaber: AUTEFA Solutions Germany GmbH, 86316 Friedberg (DE)
(72) Erfinder: HIRSCHEK, Herwig, 86399 Bobingen (DE)
(74) Vertreter: Ernicke, Hans-Dieter
(86) Internationale Anmeldenummer: PCT/EP2007/005351
(87) Internationale Veröffentlichungsnummer: WO 2007/147546

(56) Entgegenhaltungen:
- DE-C1- 4 325 199
- DE-U1- 29 905 429

## Beschreibung

Die Erfindung betrifft einen Luftförderer für Flaschen mit den Merkmalen im Oberbegriff des Hauptanspruchs.

Ein solcher Luftförderer ist aus der DE 43 25 199 C1 bekannt. Er besteht aus einem Zuführförderer und einem Abzugsförderer, die beide pneumatisch arbeiten und die an einer Umsetzstelle mit Abstand voneinander angeordnet sind. Der Zuführförderer und der Abzugsförderer weisen jeweils einen Führungskanal mit einem unteren Längsschlitz zur hängenden Aufnahme von Flaschen auf, die durch eine Luftströmung im Führungskanal pneumatisch befördert werden. An der Umsetzstelle ist ein Greiferkopf angeordnet, der vertikal und quer zur Förderrichtung des Zuführförderers und des Abzugsförderers bewegbar ist und der mehrere in einem Rahmen angeordnete Paare von Greiferleisten mit im Querschnitt L-förmigen beweglichen Greiferarmen aufweist. Die Flaschen können in die bereit gestellten Greiferleisten aus dem Zuführförderer durch die aus der Kanalmündung austretende Luftströmung geschoben werden. Die in den Greiferleisten gesammelten Flaschenreihen können dann auf einer Palette abgestellt werden. Zum Entladen einer Palette und zur Rückführung der Flaschenreihen in den Abzugsförderer besitzt der Greiferkopf einen Querförderer mit Mitnehmern zum Überschieben der Flaschenreihe.

Andere Luftförderer sind aus der Praxis bekannt. Sie besitzen ein oder mehrere Führungskanäle, in denen die Flaschen hängend geführt sind und durch einen Luftstrom vorwärts getrieben werden. Der Luftstrom wird z.B. aus einem oberhalb oder seitlich des Führungskanals befindlichen Luftkanal über Strömungsverbindungen abgezweigt und in den Führungskanal eingespeist. Zum Ausschleusen werden die Flaschen am Ende des Luftförderers auf ein laufendes Transportband oder einen anderen Förderer übergeben, der längs des Luftfördererendes verläuft und die ausgeblasenen Flaschen übernimmt.

Es ist Aufgabe der vorliegenden Erfindung, einen besseren Luftförderer aufzuzeigen.

Die Erfindung löst diese Aufgabe mit den Merkmalen im Hauptanspruch.
Der Umsetzer ermöglicht es, die Flaschen nicht nur am Ende des Luftförderers, sondern auch an beliebiger Stelle innerhalb der Luftfördererlinie ein- und auszuschleusen. Dieser Schleusvorgang kann sehr schnell und innerhalb der in der Anlage vorgegebenen Taktzeiten erfolgen. Der Luftkanal kann sich dabei ohne Unterbrechung über die Umsetz- oder Schleusstelle hinweg erstrecken.

Mit dem Umsetzer kann eine Pufferstation gebildet werden, die im Fall von Störungen in der Anlagenlinie oder aus anderen Gründen ein Ausschleusen und Zwischenpuffern der Flaschen ermöglicht, die nach Behebung der Störung sofort und schnell wieder in den Luftförderer eingeschleust und weitertransportiert werden können. Diese Pufferfunktion ermöglicht eine wesentliche Verkürzung des Luftförderers gegenüber bekannten Konstruktionen in denen eine Pufferung über lange mäandrierende Förderwege geschaffen wurde.

Der Umsetzer kann auch auf andere Weise benutzt werden, z.B. als Ausschleus- und Beladestation für einen Palettierer. Die Flaschen können reihenweise auf einen Tray gestellt werden, der über ein oder mehrere Förderer an einer Flaschenaufnahme zugeführt und zur reihenweise Befüllung seitlich verschoben werden kann. Der Tray kann für die Lagerfunktion oder für die Palettierfunktion herangezogen werden. Als Tray kann im einfachsten Falle eine Zwischenlage für einen Palettierer mit temporären Führungen für die abgestellten Flaschenreihen vorgesehen sein.

Der Umsetzer bzw. die Pufferstation können in Neuanlagen integriert werden. Sie können alternativ an bestehenden Anlagen und Luftförderern nachgerüstet werden. Mit der beanspruchten Einrichtung ist außerdem ein verbesserter und gleichmäßigerer Flaschentransport in der Luftfördererlinie möglich.

In den Unteransprüchen sind vorteilhafte Ausgestaltungen der Erfindung angegeben.

Die Erfindung ist in den Zeichnungen beispielsweise und schematisch dargestellt. Im einzelnen zeigen:
- Figur 1:: Einen Luftförderer mit einem Umsetzer und einer Pufferstation in aufgeschnittener Frontansicht,
- Figur 2:: die Anordnung von Figur 1 in Seitenansicht und
- Figur 3:: eine schematische Draufsicht auf eine Flaschenbehandlungsanlage mit einem Luftförderer.

Die Erfindung betrifft einen Luftförderer (2) für Flaschen (3), insbesondere Kunststoffflaschen. Der Luftförderer (2) ist mit einem Umsetzer (7) versehen, der Bestandteil einer Pufferstation (12) sein kann. Die Erfindung betrifft ferner eine Flaschenbehandlungsanlage (1) mit einem derartigen Luftförderer (2) nebst Umsetzer (7) bzw. Pufferstation (12).

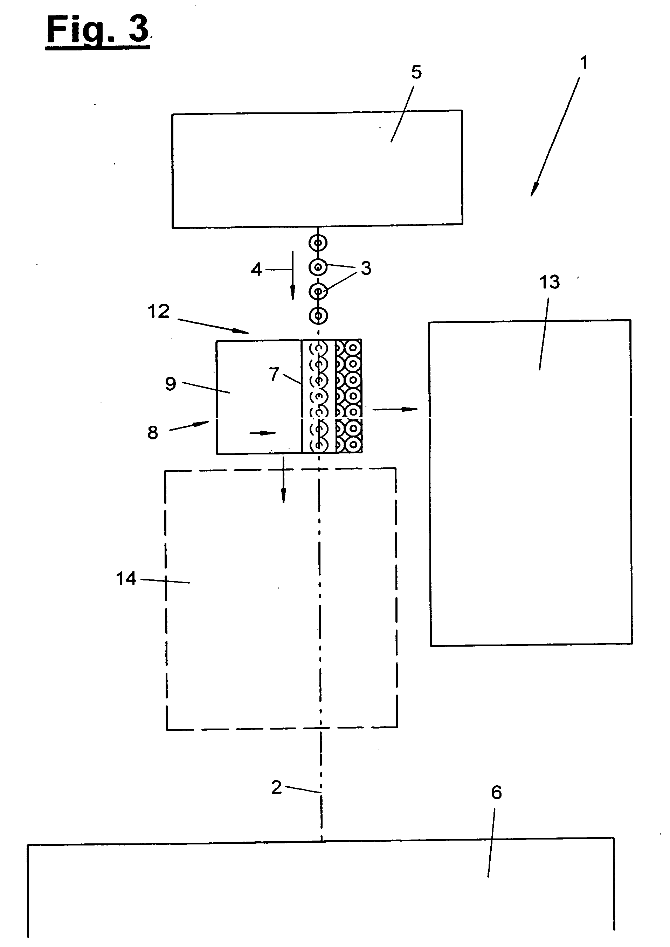

In Figur 3 ist eine Flaschenbehandlungsanlage (1) schematisch dargestellt. Sie besteht aus einem eingangsseitigen Flaschenerzeuger (5), der z.B. als Blasmaschine für Kunststoffflaschen ausgebildet sein kann. Alternativ kann der Flaschenerzeuger (5) ein Auspacker oder ein anderes Gerät sein. An den Flaschenerzeuger (5) ist ein Luftförderer (2) angeschlossen, der in Figur 3 schematisch als Luftförderlinie angedeutet ist. Der Luftförderer (2) verbindet den Flaschenerzeuger (5) mit einer Füllanlage (6). Ein Luftförderer (2) der gezeigten und beschriebenen Art kann auch an anderen Stellen der Flaschenbehandlungsanlage (1), z.B. zwischen der Füllanlage (6) und einer nachgeschalteten Etikettierstation sowie einem Palettierer oder dergleichen angeordnet sein. Vom Flaschenerzeuger (5) werden die Flaschen (3) einzeln an den Flaschenförderer (2) übergeben und dort einzeln oder in Pulks in geeigneter Weise, z.B. am Flaschenhals (19) hängend transportiert.

Zum Ein- und Ausschleusen der Flaschen (3) weist der Luftförderer (2) einen Umsetzer (7) auf. Der Umsetzer (7) kann außerdem eine Pufferstation (12) bilden, die ein Zwischenpuffern der ausgeschleusten Flaschen und ein Zurückschleusen der Flaschen (3) in den Luftförderer (2) ermöglicht. Der Umsetzer (7) besitzt eine bewegliche Flaschenaufnahme (8) für die ausgeschleusten Flaschen (3). Die ausgeschleusten Flaschen (3) können hierbei auf einen Tray (9) reihenweise abgestellt werden. Zur Erfüllung der Pufferfunktion können mehrere Trays (9) vorhanden und nacheinander befüllt werden. Die befüllten Trays (9) können hierbei über einen Traystapler platzsparend zu einem Traystapel aufgeschichtet und bei Bedarf wieder entstapelt werden. Alternativ können sie in ein angeschlossenes Traylager (13) transportiert und dort in Regalführungen oder dergleichen gelagert werden.

Mit der Pufferstation (12) können die vom Flaschenerzeuger (5) kontinuierlich gelieferten Flaschen (3) gepuffert und zwischengelagert werden, falls in der weiteren Luftfördererlinie eine Störung, z.B. im Bereich der Füllanlage (6), auftritt. Wenn die Störung behoben ist, können die Flaschen (3) wieder in den Luftförderer (2) mit dem Umsetzer (7) eingeschleust werden. In der Pufferstation (12) oder im Traylager (13) können außerdem Flaschen (3) für andere Störungsfälle bevorratet sein, wenn z.B. der Flaschenerzeuger (5) ausfällt und die Flaschenproduktion unterbrochen ist. In diesem Fall können zur Aufrechterhaltung des Betriebs der Füllanlage (6) die vorsorglich gespeicherten Flaschen (3) aus der Pufferstation (12) in den Luftförderer (2) eingeschleust werden.

In Figur 3 ist eine weitere Funktionsvariante mit einem gestrichelt dargestellten Palettierer (14) dargestellt. Mit dem Umsetzer (7) können die Flaschen (3) ausgeschleust und sofort palettiert werden. Hierzu werden die reihenweise ausgeschleusten Flaschen (3) auf einem z.B. als Zwischenlager ausgebildeten Tray (9) abgestellt, der nach Befüllen in den Palettierer (14) transportiert und dort palettiert wird. Der Umsetzer (7) kann auch integraler Bestandteil des Palettierers (14) sein.

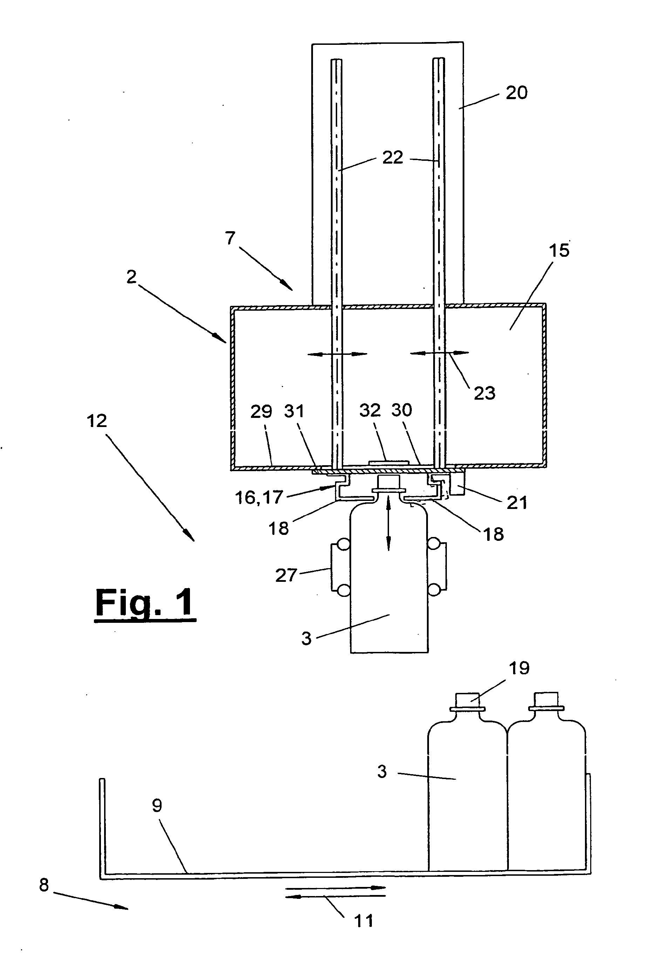

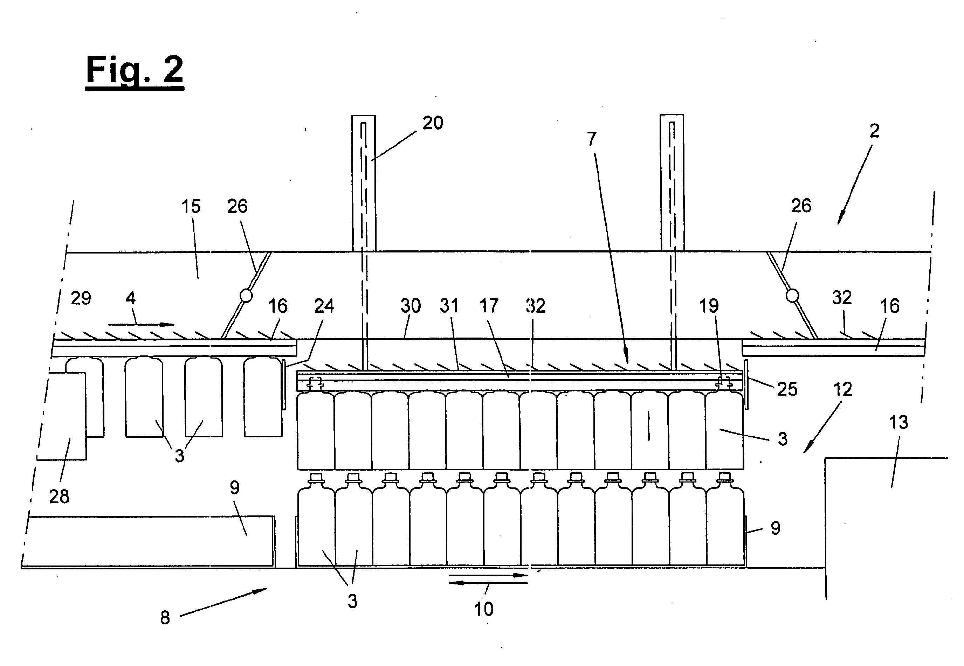

In Figur 1 und 2 sind der Luftförderer (2) und der Umsetzer (7) im einzelnen dargestellt. Der Luftförderer (2) besitzt einen oder mehrere Führungskanäle (16), in denen die Flaschen (3) an einem verbreiterten Bund des Flaschenhalses (19) hängend transportiert werden.,Der Führungskanal (16) besteht z.B. aus zwei schienenartigen und abgekröpften Führungsleisten (18), die den Kanalraum bilden und zwischen ihren unteren Schenkeln einen Schlitz für den Durchtritt des Flaschenhalses (19) freilassen. Die Förderluft wird in den Führungskanal (16) aus einem darüber oder seitlich daneben liegenden Luftkanal (15) eingespeist, indem über ein oder mehrere nicht dargestellte Gebläse ein permanenter Luftstrom in Förderrichtung (4) erzeugt wird. Der Luftschwung wird über Strömungsverbindungen (32) am Boden (29) des Luftkanals (15) in den darunter liegenden Führungskanal (16) geleitet. Die Strömungsverbindungen (32) können aus einer Reihe von Rodenöffnungen mit darüber angeordneten schuppenartigen Leitblechen bestehen. Der durch die Strömungsverbindung (32) schräg eingeleitete Luftstrom treibt beim Auftreffen auf den Flaschenhals und dessen Mundöffnung die Flaschen (3) vorwärts.

Der Umsetzer (7) dient zum Ein- und Ausschleusen der Flaschen (3). Er ist in der gezeigten Ausführungsform in den Luftförderer (2) integriert und kann sich an einer beliebigen Stelle in der Luftfördererlinie befinden. Alternativ zum gezeigten Ausführungsbeispiel kann der Umsetzer (7) sich auch am Ende des Luftförderers (2) befinden.

Der Umsetzer (7) weist mindestens einen beweglichen Führungskanalabschnitt (17), eine Hubeinrichtung (20) und eine Entladeeinrichtung (21) auf. Der Führungskanalabschnitt (17) ist ein abgetrennter Bestandteil des Führungskanals (16) und kann über die Hubeinrichtung (20) gehoben und gesenkt werden. Hierbei können die im Führungskanalabschnitt (17) befindlichen Flaschen (3) mitbewegt werden. Der Luftkanal (15) ist im Bereich des Umsetzers (7) vorzugsweise nicht unterbrochen und erstreckt sich über die Umsetzstelle hinweg. Der Luftkanal (15) und der bewegliche Führungskanalabschnitt (17) verlaufen quer zur Förderrichtung nebeneinander, z.B. seitlich nebeneinander oder untereinander.

Mittels der Entladeeinrichtung (21) können die Flaschen (3) aus dem Führungskanalabschnitt (17) freigegeben und auf eine bewegliche Flaschenaufnahme (8) aufgesetzt werden. Alternativ können an der Flaschenaufnahme (8) bereit gestellte Flaschen (3) zum Einschleusen gegriffen werden. Hierfür weist der Führungskanalabschnitt (17) bewegliche Führungsleisten (18) für den Flaschenhals (19) auf, die mit der Entladeeinrichtung (17) durch eine Schwenkbewegung oder seitliche Fahrbewegung geöffnet und geschlossen werden können. In geöffneter Stellung geben sie den Flaschenhals (19) frei. In Schließstellung untergreifen sie den Bund am Flaschenhals (19).

Der Luftkanal (15) hat im Bereich des Umsetzers (7) eine Bodenöffnung (30), in oder an der eine Bodenplatte (31) mit dem Führungskanalabschnitt (17) angeordnet ist und mit diesem über die Hubeinrichtung (20) gehoben und gesenkt werden kann. Figur 1 zeigt die angehobene Stellung, in der die Bodenplatte (31) die Bodenöffnung (30) dicht verschließt. Die Bodenplatte (31) kann die gleiche Funktion wie der Boden (29) aufweisen und mit mehreren Strömungsverbindungen (32) ausgerüstet sein. In der angehobenen Stellung fluchtet der Führungskanalabschnitt (17) mit den anderen stationären Teilen des Führungskanals (16) und bildet zusammen mit der Bodenplatte (31) einen integralen Bestandteil des Luftförderers (2).

Die Hubeinrichtung (20) und die Entladeeinrichtung (21) sind in Figur 1 und 2 schematisch angedeutet. Die Hubeinrichtung (20) ist z.B. am Luftförderer (2), insbesondere am Luftkanal (15) angebaut und besitzt ein oder mehrere Hubelemente (22), die den Luftkanal (15) durchdringen und die mit der Bodenplatte (31) oder ggf. auch mit den Führungsleisten (18) verbunden sind. Die z.B. stangenartig ausgebildeten Hubelemente (22) können ferner mit einer Verstelleinrichtung (23) versehen sein, mit der sie quer zur Kanalachse bewegt und in ihrem Abstand verändert werden können. Wenn mit dem Hubstangenende jeweils eine Führungsleiste (18) verbunden ist, kann über die Verstelleinrichtung (23) das Format und insbesondere die Breite des Führungskanalabschnittes (17) zur Anpassung an unterschiedliche Flaschengrößen verändert werden. Die stationären Führungskanäle (16) können entsprechend verstellbar sein. Die Verstelleinrichtung (23) kann außerdem die Funktion der Entladeeinrichtung (21) erfüllen, indem durch ein Auseinanderfahren der Hubstangen (22) und der Führungsleisten (18) der Flaschenhals (19) freigegeben oder aufgenommen werden kann. In diesem Fall kann eine separate Entladeeinrichtung (21) entfallen.

Die Entladeeinrichtung (21) kann alternativ im Bereich der Bodenplatte (31) angeordnet sein und ein oder beide Führungsleisten (18) zum Öffnen und Schließen des Führungskanalabschnitts (17) bewegen, wobei sie z.B. eine Schwenkbewegung und/oder eine seitliche Verschiebebewegung ausführt. Die Entladeeinrichtung kann in beliebiger Weise ausgebildet und angeordnet sein. In Figur 1 ist sie schematisch angedeutet. Sie kann z.B. aus einem Schwenkmechanismus am Ende der Führungsstangen (22) bestehen, mit dem die Führungsleisten (18) auf- und zugeschwenkt werden können. Der Schwenkmechanismus kann anschlaggesteuert oder positionsgesteuert sein und die Öffnungs- und Schließstellung in der Senkposition des Umsetzers (7) ausführen.

Der Luftförderer (2) kann im Bereich des Umsetzers (17) ein oder mehrere Flaschenstopper (24,25) aufweisen. Ferner kann der Luftförderer (2) an geeigneter Stelle der Strömungsführung, z.B. im Luftkanal (15), eine Abdichtung (26) zur Unterbrechung der Luftströmung aufweisen. In der gezeigten Ausführungsform ist jeweils ein Flaschenstopper (24,25) vor und hinter dem vertikal beweglichen Führungskanalabschnitt (17) angeordnet. Der vorderer Flaschenstopper (25) dient zur Bildung einer dichten Reihe von Flaschen (3) im Führungskanalabschnitt (17), der hierfür eine abgestimmte Länge aufweist. Mit dem Umsetzer (7) werden die Flaschen reihenweise ein- und ausgeschleust. Der hintere Flaschenstopper (24) dient zum Anhalten der in Förderrichtung (4) ankommenden Flaschen (3) am Luftförderer (2). Die Flaschenstopper (24,25) sind steuerbar und haben einen geeigneten Stellantrieb. Die Abdichtung (26) kann in beliebiger Weise ausgebildet sein. Sie besteht z.B. aus einer in Förderrichtung (4) vor dem Umsetzer (7) angeordneten drehbaren Klappe. Zusätzlich kann eine weitere Abdichtung (27) hinter dem Umsetzer (7) angeordnet sein.

Am Luftförderer (2) kann in Förderrichtung (4) vor dem Umsetzer (7) eine Vereinzelungseinrichtung (28) angeordnet sein, die z.B. aus einer Schnecke, einem Sternrad oder dergleichen besteht. Die Vereinzelungseinrichtung (28) dient zum Bilden einer definierten Flaschenreihe im Führungskanal (16) vor dem Umsetzer (7). Mit der Vereinzelungseinrichtung (28) können ferner die ankommenden Flaschen (3) gerade gestellt und gezählt werden. In Abhängigkeit vom Zählergebnis kann der Umsetzer (7) über eine geeignete Steuerung gesteuert werden.

Die Flaschenaufnahme (8) dient zur Aufnahme der Flaschenreihe beim Aus- und Einschleusen. Sie besteht z.B. aus einem tischartigen Gestell und zur Aufnahme von mindestens einem Tray (9). Die Flaschenaufnahme (8) weist zwei quer zueinander gerichtete Förderer (10,11) auf, die auf den Tray (9) einwirken. Mit dem einen Förderer (10), der z.B. längs der Förderrichtung (4) ausgerichtet ist, können Trays (9) an- und abtransportiert werden. Mit dem quer zur Förderrichtung (4) ausgerichteten Förderer (11) kann der Tray (9) in Schritten entsprechend der Flaschenbreite seitlich versetzt werden, um die Flaschenreihen nacheinander einsetzen oder entnehmen zu können.

Der Tray (9) kann eine beliebige Form haben. In der gezeigten Ausführungsform hat er eine Wannenform mit einem Boden und umlaufenden Seitenwänden. Der Tray kann an der Innenseite längs- und/oder querlaufende Führungsleisten zur Trennung und Positionierung der einzelnen Flaschen (3) aufweisen. Der Tray (9) kann mit oder ohne Flaschen (3) stapelbar sein und hierfür eine entsprechende Ausbildung der Seitenwände und des Bodenbereichs aufweisen.

Der Umsetzer (7) kann ferner die in Figur 1 schematisch angedeutete Flaschenführung (27) aufweisen, die z.B. aus einem an der Bodenplatte (31) befindlichen und ggf. in der Breite und/oder Höhe verstellbaren Geländer bestehen, mit dem die vom Umsetzer gegriffene Flaschenreihe (3) seitlich geführt wird. Die Flaschenführung (27) kann alternativ stationär angeordnet und am Boden (29) des Luftkühlkanals (15) montiert sein. Ferner kann die Flaschenführung (27) zusätzliche Führungselemente an der Front und der Rückseite der aufgenommenen Flaschenreihe aufweisen, um eine allseitige Führung der Flaschenreihe beim Heben und Senken zu bieten.

Figur 1 und 2 verdeutlichen verschiedene Schritte des Ein- und Ausschleusvorgangs. In Figur 1 befinden sich der Führungskanalabschnitt (17) und die Bodenplatte (31) in der angehobenen Stellung und dicht an der Unterseite des Luftkanals (15). Wenn die Flaschenstopper (24,25) sich in Ruhestellung befinden, können die Flaschen (4) durch den Umsetzer (7) und den Führungskanalabschnitt (17) hindurchtransportiert werden. Wenn eine Flaschenreihe ausgeschleust werden soll, fährt zunächst der vordere Flaschenstopper (25) ein, wodurch die ankommenden Flaschen (3) die in Figur 2 gezeigte Reihe bilden. Wenn die Reihe komplett ist, fährt der hintere Flaschenstopper (24) ein und stoppt die Folgeflaschen im Luftförderer (2). Die Hubeinrichtung (20) wird aktiviert und senkt den Führungskanalabschnitt (17) in der in Figur 2 gezeigten Weise mit der aufgenommenen Flaschenreihe auf die Flaschenaufnahme (8) ab und stellt sie auf den Tray (9). Durch Betätigung der Entladeeinrichtung (21) wird die abgestellte Flaschenreihe freigegeben und der Führungskanalabschnitt (17) mit der Bodenplatte (31) wieder nach oben in die in Figur 1 gezeigte Position bewegt. Nach Zurückziehen des Flaschenstoppers (24) können die aufgestauten Flaschen in den Führungskanalabschnitt (17) geblasen werden. In der Zwischenzeit wird der Tray (9) durch den Förderer (11) um eine Flaschenbreite seitlich versetzt um die nächste Flaschenreihe aufnehmen zu können.

Beim Einschleusen von Flaschen (3) aus der Pufferstation (12) bzw. dem Traylager (13) läuft der vorbeschriebene Vorgang umgekehrt ab. Durch den hinteren Flaschenstopper (24) werden die auf dem Luftförderer (2) ankommenden Flaschen (3) gestoppt und ggf. gestaut. Mit dem abgesenkten Führungskanalabschnitt (17) kann durch Betätigung der Entladeeinrichtung (21) eine Flaschenreihe von der Flaschenaufnahme (8) bzw. vom Tray (9) gegriffen und angehoben werden. In der angehobenen Stellung fluchtet der Führungskanalabschnitt (17) mit dem weiterführenden Führungskanal (16), so dass die Flaschenreihe vom Förderluftstrom ergriffen und in Förderrichtung (4) im Luftförderer (2) abtransportiert werden kann. Beim Einschleusen kann der Flaschenstopper (25) ebenfalls in Funktion treten und den Zeitpunkt zur Freigabe und Weiterförderung der eingeschleusten Flaschenreihe steuern. Nach dem Einschleusen kann der anderer Flaschenstopper (24) ebenfalls öffnen. In dieser Zeit taktet der Förderer (11) den Tray (9) eine Flaschenreihe weiter, so dass der Einschleusvorgang erneut stattfinden kann. Wenn eine zulaufseitige Störung vorliegt, braucht der Flaschenstopper (24) nicht in Funktion zu treten.

Wenn ein Tray (9) beim Ausschleusen von Flaschen (3) gefüllt ist, kann er von der Flaschenaufnahme (8) mit dem Förderer (10) zu einem benachbarten Traystapler und/oder zum Traylager (13) transportiert werden. Beim Ausschleusen wird vom Traystapler oder vom Traylager (13) ein gefüllter Tray (9) zur Flaschenaufnahme (8) transportiert und bereit gestellt.

Der Tray (9) kann in der vorerwähnten Weise ohne Seitenwände und als reine Bodenplatte z.B. als Zwischenlage für einen Palettenstapel, ausgebildet sein. Die Lage der auf dem Tray stehenden Flaschen (9) kann in diesem Fall durch seitliche Schieber oder andere Führungselemente gesichert werden, die mit einem steuerbaren Zustellantrieb versehen sind und die ggf. auch beim Drehtransport im Palettierer (14) ein Stück mitbewegt werden. Die Führungselemente können miteinander einen Führungsrahmen bilden. Derartige Führungselemente können auch in Verbindung mit den in den Ausführungsbeispielen gezeigten wannenartigen Trays verwendet werden und zur Sicherung der an einer Seite frei stehenden Flaschenreihe verwendet werden.

Abwandlungen der gezeigten und beschriebenen Ausführungsformen sind in verschiedener Weise möglich. Zum einen kann der Boden (29) des Luftkanals (15) bis auf die Durchlassöffnungen für die Hubstangen (22) geschlossen sein, wobei die durchtretenden Hubstangen (22) direkt mit den Führungsleisten (18) verbunden sind. Die bewegliche Bodenplatte (31) und die Bodenöffnung (30) können,bei dieser Gestaltung entfallen. In diesem Fall wird nur der Führungskanalabschnitt (17) gehoben und gesenkt. Ferner kann die Hubeinrichtung (20) in anderer Weise ausgebildet sein. Sie muss nicht den Kanalaufsatz mit dem Antrieb und der Führung für die den Luftkanal (15) durchdringenden Hubstangen (22) aufweisen. Die Hubeinrichtung (20) kann auch unterhalb oder seitlich neben dem Luftkanal (15) oder ggf. an einem Gestell unabhängig vom Luftkanal (15) angeordnet sein und von der Seite her am Führungskanalabschnitt (17) angreifen.

Ferner ist es möglich, an einem Luftkanal (15) mehrere Führungskanäle (16) und dementsprechend mehrere Führungskanalabschnitte (17) nebeneinander anzuordnen. In diesem Fall können mehrere parallele Flaschenreihen gemeinsam gegriffen und ein- und ausgeschleust werden. Der eventuell bestehende Reihenabstand kann an der Flaschenaufnahme (8) durch die besagten Schieber oder dergleichen beim Ausschleusen beseitigt und beim Einschleusen hergestellt werden.

Ferner ist es möglich, den Förderer (11) für den seitlichen Trayversatz durch den vorerwähnten Schieber zu ersetzen, wobei die Flaschenreihen beim Ein- und Ausschleusen immer an der selben Stelle auf dem Tray (9) bereit gestellt und anschließend oder zuvor mit dem Schieber seitlich verschoben werden. In weiterer Abwandlung kann die Hubeinrichtung (20) eine Zusatzachse aufweisen, um die aufgenommene Flaschenreihe seitlich zu versetzen. Die gezeigte einachsige Hubeinrichtung führt nur eine Hebe- und Senkbewegung durch. Die Trennung von Hubeinrichtung (20) und Querverstellung durch Förderer (11) bzw. Schieber hat dabei den Vorteil einer zeitlichen Überlappung der Bewegungen und bringt eine Zeitersparnis, welche für eine hohe Ein- und Ausschleusgeschwindigkeit sorgt. Die Taktzeit wird dann im wesentlichen durch die im Heben und Senken benötigte Zeit bestimmt.

Ferner sind Variationen des Luftförderers (2) möglich. Die Förderluft kann dem Führungskanal (16) auf andere Weise zugeführt werden. Ferner kann der Führungskanal (16) anders gestaltet sein, was entsprechend für den Führungskanalabschnitt (17) und dessen Führungsleisten (18) gilt.

### BEZUGSZEICHENLISTE

- 1: Flaschenbehandlungsanlage
- 2: Luftförderer
- 3: Flasche
- 4: Förderrichtung
- 5: Flaschenerzeuger, Blasmaschine
- 6: Füllanlage
- 7: Umsetzer
- 8: Flaschenaufnahme
- 9: Tray
- 10: Förderer
- 11: Förderer
- 12: Pufferstation
- 13: Traylager
- 14: Palettierer
- 15: Luftkanal
- 16: Führungskanal
- 17: Führungskanalabschnitt
- 18: Führungsleiste
- 19: Flaschenhals
- 20: Hubeinrichtung
- 21: Entladeeinrichtung
- 22: Hubelement, Hubstange
- 23: Verstelleinrichtung
- 24: Flaschenstopper
- 25: Flaschenstopper
- 26: Abdichtung, Klappe
- 27: Flaschenführung, Geländer
- 28: Vereinzelungseinrichtung
- 29: Boden
- 30: Bodenöffnung
- 31: Bodenplatte
- 32: Strömungsverbindung

## Patentansprüche

1. Luftförderer für Flaschen (3) mit mindestens einem Führungskanal (16), in dem die Flaschen (3) hängend geführt sind, wobei der Luftförderer (2) mindestens einen Umsetzer (7) mit mindestens einem beweglichen Führungskanalabschnitt (17) und einer Hubeinrichtung (20) sowie einer Entladeeinrichtung (21) aufweist, **dadurch gekennzeichnet, dass** der Luftförderer (2) einen Luftkanal (15) aufweist, der quer zur Förderrichtung gesehen neben dem beweglichen Führungskanalabschnitt (17) verläuft.

2. Luftförderer nach Anspruch 1, **dadurch gekennzeichnet, dass** der Luftkanal (15) im Bereich des Umsetzers (7) nicht unterbrochen ist und sich über die Umsetzstelle hinweg erstreckt.

3. Luftförderer nach Anspruch 1 oder 2, **dadurch gekennzeichnet, dass** der Umsetzer (7) unterhalb des Führungskanalabschnitts (17) eine bewegliche Flaschenaufnahme (8) für mehrere Flaschenreihen aufweist.

4. Luftförderer nach Anspruch 1, 2 oder 3, **dadurch gekennzeichnet, dass** der Führungskanalabschnitt (17) bewegliche Führungsleisten (18) für den Flaschenhals (19) aufweist.

5. Luftförderer nach einem der vorhergehenden Ansprüche, **dadurch gekennzeichnet, dass** der Umsetzer (7) eine Verstelleinrichtung (23) für die Führungsleisten (18) aufweist.

6. Luftförderer nach einem der vorhergehenden Ansprüche, **dadurch gekennzeichnet, dass** der Luftförderer (2) einen Luftkanal (15) aufweist, an dessen Unterseite der Führungskanal (16) angeordnet ist, wobei der Luftkanal (15) im Bereich des Umsetzers (7) eine Bodenöffnung (30) aufweist, in oder an der eine Bodenplatte (31) mit dem Führungskanalabschnitt (17) angeordnet ist.

7. Luftförderer nach einem der vorhergehenden Ansprüche, **dadurch gekennzeichnet, dass** der Umsetzer (7) mehrere Flaschenstopper (24,25) aufweist.

8. Luftförderer nach einem der vorhergehenden Ansprüche, **dadurch gekennzeichnet, dass** der Umsetzer (7) eine Flaschenführung (27) aufweist.

9. Luftförderer nach einem der vorhergehenden Ansprüche, **dadurch gekennzeichnet, dass** der Umsetzer (7) ein oder mehrere schaltbare Abdichtungen für den Luftförderer (2) aufweist.

10. Luftförderer nach einem der vorhergehenden Ansprüche, **dadurch gekennzeichnet, dass** die Flaschenaufnahme (8) mindestens einen Förderer (10,11) für einen Tray (9) aufweist.

11. Luftförderer nach einem der vorhergehenden Ansprüche, **dadurch gekennzeichnet, dass** der Luftförderer (2) vor oder am Umsetzer (7) eine Vereinzelungseinrichtung (28) für die Flaschen (3) aufweist.

12. Luftförderer nach einem der vorhergehenden Ansprüche, **dadurch gekennzeichnet, dass** der Umsetzer (7) in die Luftfördererlinie integriert ist.

13. Luftförderer nach einem der vorhergehenden Ansprüche, **dadurch gekennzeichnet, dass** der Umsetzer (7) an ein Traylager (13) und/oder einen Palettierer (14) angeschlossen ist.

14. Luftförderer nach einem der vorhergehenden Ansprüche, **dadurch gekennzeichnet, dass** der Luftförderer (2) eingangseitig an einen Flaschenerzeuger (5), insbesondere eine Blasmaschine für Kunststoffflaschen, angeschlossen ist und/oder der Luftförderer (2) ablaufseitig an eine Füllanlage (6) angeschlossen ist.

15. Flaschenbehandlungsanlage mit einem Flaschenerzeuger (5), insbesondere einer Blasmaschine für Kunststoffflaschen und einer Füllanlage (6) sowie einem Luftförderer (2), **dadurch**
**gekennzeichnet, dass** zwischen dem Flaschenerzeuger (5) und der Füllanlage (6) in der Luftfördererlinie eine Pufferstation (12) mit einem Umsetzer (7) zum Ein- und Ausschleusen von Flaschen (3) angeordnet ist, wobei der Luftförderer (2) und der Umsetzer (7) nach einem der Ansprüche 1 bis 14 ausgebildet sind.

## Claims

1. Air conveyor for bottles (3) with at least one guide channel (16) in which the bottles (3) are guided in a hanging manner, wherein the air conveyor (2) has at least one transfer means (7) with at least one movable guide channel section (17) and a lifting device (20) and an unloading device (21), **characterized in that** the air conveyor (2) has an air duct (15) which runs next to the movable guide channel section (17), as seen transversely with respect to the conveying direction.

2. Air conveyor according to Claim 1, **characterized in that** the air duct (15) is not interrupted in the region of the transfer means (7) and extends beyond the transfer point.

3. Air conveyor according to Claim 1 or 2, **characterized in that** below the guide channel section (17) the transfer means (7) has a movable bottle receptacle (8) for a plurality of rows of bottles.

4. Air conveyor according to Claim 1, 2 or 3, **characterized in that** the guide channel section (17) has movable guide strips (18) for the bottle neck (19).

5. Air conveyor according to one of the preceding claims, **characterized in that** the transfer means (7) has an adjusting device (23) for the guide strips (18).

6. Air conveyor according to one of the preceding claims, **characterized in that** the air conveyor (2) has an air duct (15), on the lower side of which the guide channel (16) is arranged, the air duct (15) having, in the region of the transfer means (7), a bottom opening (30) in or on which a baseplate (31) with the guide channel section (17) is arranged.

7. Air conveyor according to one of the preceding claims, **characterized in that** the transfer means (7) has a plurality of bottle stoppers (24, 25).

8. Air conveyor according to one of the preceding claims, **characterized in that** the transfer means (7) has a bottle guide (27).

9. Air conveyor according to one of the preceding claims, **characterized in that** the transfer means (7) has one or more switchable seals for the air conveyor (2).

10. Air conveyor according to one of the preceding claims, **characterized in that** the bottle receptacle (8) has at least one conveyor (10, 11) for a tray (9).

11. Air conveyor according to one of the preceding claims, **characterized in that** upstream or at the transfer means (7) the air conveyor (2) has a separating device (28) for the bottles (3).

12. Air conveyor according to one of the preceding claims, **characterized in that** the transfer means (7) is integrated into the air conveyor line.

13. Air conveyor according to one of the preceding claims, **characterized in that** the transfer means (7) is connected to a tray store (13) and/or to a palletizer (14).

14. Air conveyor according to one of the preceding claims, **characterized in that** the air conveyor (2) is connected on the input side to a bottle-producing machine (5), in particular to a blow-moulding machine for plastics bottles, and/or the air conveyor (2) is connected on the outlet side to a filling plant (6).

15. Bottle-handling plant with a bottle-producing machine (5), in particular a blow-moulding machine for plastics bottles, and a filling plant (6) and an air conveyor (2), **characterized in that** a buffer station (12) with a transfer means (7) for feeding in and discharging bottles (3) is arranged in the air conveyor line between the bottle-producing machine (5) and the filling plant (6), the air conveyor (2) and the transfer means (7) being formed according to one of Claims 1 to 14.

## Revendications

1. Transporteur pneumatique pour bouteilles (3), comprenant au moins un canal de guidage (16), dans lequel les bouteilles (3) sont guidées de manière suspendue, le transporteur pneumatique (2) présentant au moins un dispositif de transfert (7) avec au moins une portion de canal de guidage mobile (17) et un dispositif de levage (20) ainsi qu'un dispositif de déchargement (21), **caractérisé en ce que** le transporteur pneumatique (2) présente un canal pneumatique (15) qui, vu transversalement à la direction de transport, s'étend à côté de la portion de canal de guidage mobile (17).

2. Transporteur pneumatique selon la revendication 1, **caractérisé en ce que** le canal pneumatique (15) n'est pas interrompu dans la région du dispositif de transfert (7) et s'étend au-delà du point de transfert.

3. Transporteur pneumatique selon la revendication 1 ou 2, **caractérisé en ce que** le dispositif de transfert (7) présente, en dessous de la portion de canal de guidage (17), un logement de bouteilles mobile (8) pour plusieurs rangées de bouteilles.

4. Transporteur pneumatique selon la revendication 1, 2 ou 3, **caractérisé en ce que** la portion de canal de guidage (17) présente des nervures de guidage mobiles (18) pour le goulot (19) des bouteilles.

5. Transporteur pneumatique selon l'une quelconque des revendications précédentes, **caractérisé en ce que** le dispositif de transfert (7) présente un dispositif de réglage (23) pour les nervures de guidage (18).

6. Transporteur pneumatique selon l'une quelconque des revendications précédentes, **caractérisé en ce que** le transporteur pneumatique (2) présente un canal pneumatique (15) sur le côté inférieur duquel est disposé le canal de guidage (16), le canal pneumatique (15) présentant, dans la région du dispositif de transfert (7), une ouverture de fond (30), dans ou contre laquelle est disposée une plaque de fond (31) avec la portion de canal de guidage (17).

7. Transporteur pneumatique selon l'une quelconque des revendications précédentes, **caractérisé en ce que** le dispositif de transfert (7) présente plusieurs bouchons de bouteilles (24, 25).

8. Transporteur pneumatique selon l'une quelconque des revendications précédentes, **caractérisé en ce que** le dispositif de transfert (7) présente un guidage (27) pour les bouteilles.

9. Transporteur pneumatique selon l'une quelconque des revendications précédentes, **caractérisé en ce que** le dispositif de transfert (7) présente une ou plusieurs garnitures d'étanchéité pour le transporteur pneumatique (2).

10. Transporteur pneumatique selon l'une quelconque des revendications précédentes, **caractérisé en ce que** le logement de bouteilles (8) présente au moins un transporteur (10, 11) pour un plateau (9).

11. Transporteur pneumatique selon l'une quelconque des revendications précédentes, **caractérisé en ce que** le transporteur pneumatique (2) présente, avant ou contre le dispositif de transfert (7), un dispositif de séparation (28) pour les bouteilles (3).

12. Transporteur pneumatique selon l'une quelconque des revendications précédentes, **caractérisé en ce que** le dispositif de transfert (7) est intégré dans la chaîne du transporteur pneumatique.

13. Transporteur pneumatique selon l'une quelconque des revendications précédentes, **caractérisé en ce que** le dispositif de transfert (7) est raccordé à un support de plateau (13) et/ou un palettiseur (14).

14. Transporteur pneumatique selon l'une quelconque des revendications précédentes, **caractérisé en ce que** le transporteur pneumatique (2) est raccordé du côté de l'entrée à un dispositif de fabrication de bouteilles (5), en particulier une machine de soufflage pour des bouteilles en plastique, et/ou le transporteur pneumatique (2) est raccordé du côté de la sortie à une installation de remplissage (6).

15. Installation de traitement de bouteilles comprenant un dispositif de fabrication de bouteilles (5), en particulier une machine de soufflage pour des bouteilles en plastique, et une installation de remplissage (6) ainsi qu'un transporteur pneumatique (2), **caractérisée en ce qu'**entre le dispositif de fabrication de bouteilles (5) et l'installation de remplissage (6) est disposé, dans la chaîne du transporteur pneumatique, un poste tampon (12) avec un dispositif de transfert (7) pour introduire et décharger des bouteilles (3), le transporteur pneumatique (2) et le dispositif de transfert (7) étant réalisés selon l'une quelconque des revendications 1 à 14.
